(19) **Europäisches Patentamt European Patent Office Office européen des brevets**

(11) **EP 1 273 931 B1**

(12) **FASCICULE DE BREVET EUROPEEN**

(45) Date de publication et mention de la délivrance du brevet:
**22.02.2017 Bulletin 2017/08**

(51) Int Cl.:
***G01T 1/105*** *(2006.01)*

(21) Numéro de dépôt: **02291637.3**

(22) Date de dépôt: **01.07.2002**

(54) **Capteur de rayonnement, à compensation d'énergie et grande ouverture angulaire, pour la dosimètrie à distance**

Zur Ferndosimetrie fähiger Strahlungsdetektor mit Energiekompensation und weitwinkliger Öffnung

Radiation sensor with energy compensation and with a large angular opening, for dosimetry at a distance

(84) Etats contractants désignés:
**AT BE BG CH CY CZ DE DK EE ES FI FR GB GR IE IT LI LU MC NL PT SE SK TR**

(30) Priorité: **02.07.2001 FR 0108736**

(43) Date de publication de la demande:
**08.01.2003 Bulletin 2003/02**

(73) Titulaire: **Commissariat à l'Énergie Atomique et aux Énergies Alternatives 75015 Paris (FR)**

(72) Inventeurs:
• **Magne, Sylvain**
  **92260 Fontenay aux Roses (FR)**
• **Ranchoux, Gilles**
  **34670 Baillargues (FR)**
• **Bouvet, Jean-Pierre**
  **91460 Marcoussis (FR)**

(74) Mandataire: **Audier, Philippe André et al BREVALEX 95 rue d'Amsterdam 75378 Paris Cedex 8 (FR)**

(56) Documents cités:
**US-A- 3 426 197    US-A- 4 999 504**
**US-A- 5 091 653    US-A- 6 041 150**

**Description**

**DOMAINE TECHNIQUE**

La présente invention concerne un capteur de rayonnement pour la dosimétrie à distance.

Elle s'applique au rayonnement X et au rayonnement gamma.

Dans les installations nucléaires ou en médecine nucléaire, le personnel est soumis constamment à l'effet des rayonnements. Il en résulte qu'il est important de connaître avec précision, si possible en temps réel et en tout cas à la fin ou pendant chaque période de présence, la dose reçue par le personnel ainsi que la dose cumulée, par exemple au cours d'un mois ou d'une année, afin de s'assurer du respect de la réglementation en vigueur dans ce domaine.

La dosimétrie individuelle est réalisée à l'aide de dosimètres passifs ou actifs. Les dosimètres passifs sont exploités mensuellement ou à la demande, tandis que les dosimètres actifs permettent d'assurer une dosimétrie en temps réel des personnels intervenants, conduisant à une plus grande maîtrise de l'évolution des doses individuelles et des conditions radiologiques dans les installations nucléaires et donc au respect du principe ALARA (As Low As Reasonably Achievable). A titre indicatif, l'ICRP (International Commission on Radiological Protection) recommande une limitation des doses individuelles annuelles à 20 mSv, recommandation reprise dans une directive européenne de 1996.

La dosimétrie en temps réel, ou dosimétrie opérationnelle, nécessite une limite de détection de l'ordre de 1 μSv alors que la surveillance des installations est moins restrictive, la limite pouvant varier de quelques dizaine de μSv à quelques mSv selon les utilisations. Dans le cadre de la dosimétrie opérationnelle, les opérateurs portent des dosimètres de poitrine, censés donner une indication de la dose pour le corps entier et des dosimètres-bagues, pour suivre les doses reçues par les mains.

Il existe des dosimètres absolus tels que les stylos-dosimètres (chambres d'ionisation), donnant la dose intégrée dans le temps avec une lecture directe analogique. Ces dosimètres sont sensibles aux chocs, leur plage de mesure est limitée et leur utilisation est limitée à des spécialistes. Il existe aussi des compteurs de type Geiger-Muller qui nécessitent une tension élevée et, comme les stylos-dosimètres, ne sont pas utilisables sur le terrain. Les dosimètres les plus utilisés sur le terrain sont relatifs.

A quelques exceptions notables (les plastiques, le diamant), les matériaux constituant les dosimètres exploités industriellement (films photographiques, scintillateurs, semi-conducteurs, dosimètres radiophotoluminescents (RPL), thermoluminescents (TL) ou à luminescence stimulée optiquement (OSL) donnent une sur-réponse, c'est à dire une réponse supérieure à la réponse correcte, notamment aux basses énergies.

Dans ce qui suit, nous détaillerons la plupart des matériaux les plus performants utilisés pour la détection de rayonnements et nous montrerons que, pour les utiliser dans le champ très spécifique de la radioprotection, ils doivent être conditionnés dans des boîtiers spécifiques pour rendre leur réponse en énergie proche de celle des tissus humains, et que, plus généralement, ils peuvent également incorporer des filtres séparant les divers rayonnements (gamma, béta, neutrons).

Dans la présente invention, on considère un dosimètre dont le processus de lecture repose sur la Luminescence Stimulée Optiquement (en anglais Optically Stimulated Luminescence) ou OSL. Cette technique est assez proche de la thermoluminescence mais le déclenchement de la luminescence s'obtient sous l'effet d'une stimulation optique contrairement à la thermoluminescence ou, par définition, la luminescence est induite par chauffage du matériau irradié.

Il est alors possible de stimuler le matériau encapsulé (à l'abri de la lumière ambiante) au moyen d'un laser, par l'intermédiaire d'une fibre optique, et de récupérer, toujours de manière optique, une énergie lumineuse proportionnelle à la dose déposée dans le matériau. Il faut remarquer que la longueur d'onde de la luminescence stimulée optiquement est toujours plus courte que celle de la lumière de stimulation, cette propriété permettant de distinguer cette luminescence de toute fluorescence susceptible d'apparaître à des longueurs d'ondes plus élevées. Cette intensité lumineuse étant généralement dans le domaine du visible, il est facile de mesurer le signal, grâce à un photomultiplicateur par exemple.

Cette technique présente un avantage : grâce à elle, on est capable de déterminer la dose déposée au cours d'une période relativement courte (typiquement quelques minutes), ce qui permet d'accéder finalement au débit de dose. Il est donc possible de faire de la surveillance (en anglais "monitoring") à distance et en temps réel.

Considérons maintenant des problèmes qu'il faut résoudre.

Le domaine de la radioprotection est plus exigeant que l'élémentaire détection de rayonnement. Cette dernière suffit le plus souvent pour le suivi des installations nucléaires, pour lesquelles les précisions requises sont larges et les radionucléides présents sont la plupart du temps identifiés.

En radioprotection, en revanche, il est fondamental de mesurer la dose reçue par le corps humain et non pas celle qui est reçue par le matériau détecteur. Dans le cas où le matériau détecteur est parfaitement équivalent à un tissu(en anglais "tissue"), ce qui est le cas des plastiques, aucune compensation n'est nécessaire. Toutefois, de tels matériaux sont généralement moins performants pour la détection que les autres matériaux utilisés notamment en scintillation ou en TL.

Ainsi, dans le cas général où le matériau détecteur intègre toutes les énergies sans distinction, il est nécessaire de se ramener à la dose absorbée par les tissus, au moyen d'un boîtier de compensation entourant ce matériau, boîtier que l'on appelle « filtre » dans ce qui suit, afin que la réponse du dosimètre (c'est-à-dire l'ensemble-support, le matériau détecteur et les filtres) soit représentative des effets biologiques induits par les rayonnements. Ceci est applicable à tous les dosimètres pour lesquels les énergies des photons ne sont pas connues a priori.

Les dosimètres personnels sont soumis à diverses normes. Celle qui est la plus représentative de tels dosimètres est la norme CEI 61066 consacrée aux systèmes de dosimétrie par thermoluminescence pour la surveillance individuelle et de l'environnement.

Outre la stabilité (notamment pour ce qui concerne la température, la sensibilité à la lumière ambiante, la stabilité de l'information et la remise à zéro), la linéarité et la reproductibilité des mesures obtenues avec un tel système, le texte relatif à cette norme précise en particulier que le système doit atteindre un seuil de détection minimal de 10 $\mu$Sv, une réponse en énergie de photons (entre 15 keV et 3 MeV) qui ne doit pas différer de la valeur conventionnellement vraie de plus de 30 %, une réponse en énergie de rayonnement béta qui ne doit pas varier de plus de 30 % pour des énergies maximales variant de 500 keV à 3 MeV et une réponse angulaire (pour les photons) qui ne doit pas excéder 15 % sur $\pm$ 60° par rapport à l'incidence normale du capteur, pour une énergie de photons de 60 keV.

Enfin, la réponse aux neutrons ne doit pas être supérieure à 1% de la réponse aux photons. Cela fixe une limite au flux neutronique admissible, connaissant la sensibilité aux neutrons du détecteur. Toutefois, dans la pratique l'exposition aux flux de neutrons est faible, sauf dans des cas bien particuliers. De même, un capteur respectant la norme précédente n'est pas directement adapté à des utilisations dans les accélérateurs de particules où les énergies électroniques sont très supérieures à 1 MeV.

La compensation est d'autant plus ardue que le numéro atomique, noté Z, du matériau est différent du Z du tissu humain (proche de 7,2). Dans la présente invention, on utilise par exemple, en tant que matériau détecteur, un cristal d'alumine dans la phase $\alpha$.

Le principe de compensation dépend du matériau détecteur et de sa géométrie. Le principe de compensation qui est décrit dans la suite est adapté, tel quel, à tous les matériaux de Z proche de 10, tels que l'alumine ou la silice. Ce principe de compensation peut toutefois être transposé à d'autres matériaux en modifiant les paramètres géométriques des matériaux qui sont représentés.

Ainsi, les problèmes qu'il faut résoudre pour concevoir un dosimètre à fibre optique, fonctionnant par thermoluminescence, par luminescence stimulée optiquement ou par radio-photoluminescence, adapté aux besoins de la radioprotection pour la mesure du paramètre noté Hp(10) (dose profonde) et respectant la norme CEI 61066 sont les suivants :

- obtenir un très grand angle opérationnel de surveillance, et
- une bonne collection de lumière pour accroître la sensibilité de la détection (interface détecteur-fibre optique),
- une compensation de l'énergie des photons pour une gamme d'énergie allant de 15 keV jusqu'à 3 MeV,
- une compensation de l'énergie de rayonnement béta jusqu'à des énergies maximales de 500 keV à 3 MeV,
- un boîtier de compensation intégré, qui est susceptible d'être transporté au bout d'une fibre optique et dont le diamètre n'excéde pas 15 mm, pour permettre des inspections dans des endroits qui sont inaccessibles aux capteurs traditionnels.

## ETAT DE LA TECHNIQUE ANTERIEURE

Dans le cas d'une irradiation photon-matière, les photons interagissent tout d'abord selon trois processus primaires : l'effet photo-électrique, la diffusion Compton et la création de paires. Leurs sections efficaces (en anglais « cross sections ») d'interaction respectives varient selon les énergies des photons et le Z du matériau traversé.

La section efficace d'interaction photoélectrique est proportionnelle à $Z^x(h\nu)^p$, où Z est le numéro atomique du matériau et $h\nu$ l'énergie du photon incident, avec $4<x<5$ et $-3,5<p<-1$. Ce phénomène est prédominant aux basses énergies et est à l'origine de la forte sur-réponse observée. Lorsque le matériau est composé de plusieurs éléments simples, le numéro atomique équivalent se définit par pondération géométrique. Par abus de langage, on l'appelle le Z effectif du matériau, noté $Z_{eff}$.

Par exemple, le Z effectif du sulfure de magnésium dans le domaine photoélectrique est de 14,5 et donc proche de celui du silicium (14) tandis que le $Z_{eff}$ de l'alumine est de l'ordre de 10,2. Quant à celui du tissu humain, il est de l'ordre de 7,2.

La deuxième interaction primaire concerne la diffusion Compton des photons gamma sur les électrons, dont la section efficace est proportionnelle au numéro atomique Z du milieu. L'effet est prédominant aux énergies moyennes (typiquement entre 200 keV et 1 MeV).

Le phénomène de création de paires n'apparaît significativement que pour des énergies des photon supérieures à 5 MeV. En pratique, les plus fortes énergies de photons émis par des radionucléides sont inférieures à 5 MeV. Ainsi, les deux processus primaires qui entrent en considération sont les processus photo-électrique et de diffusion Compton.

Après interaction primaire, les électrons vont à leur tour céder leur énergie au matériau de différentes manières, par fluorescence, par effet Auger, par rayonnement de freinage (en anglais "Bremsstrahlung") ou par collisions coulombiennes. Tous ces événements peuvent apparaître les uns à la suite des autres. Il est donc nécessaire de traiter ces problèmes selon une base statistique. Les méthodes employées pour modéliser ces phénomènes de dépôt d'énergie reposent sur des méthodes statistiques de type Monte-Carlo.

La dose reçue par le matériau correspond à l'énergie déposée dans le matériau par les processus décrits précédemment, rapportée à la masse du matériau, et s'exprime en gray (J/kg).

De surcroît, les dosimètres individuels doivent être étalonnés en terme d'équivalent de dose Hp(d), c'est-à-dire en terme de dose équivalente dans le tissu humain à une profondeur d. En effet, selon la nature du rayonnement (c'est-à-dire selon que ce dernier est fortement ou peu pénétrant), ses effets sur le corps humain au niveau de la peau (d = 0,07 mm), des yeux (d=3 mm) et des os (d = 10 mm) sont différents.

On peut se placer dans une situation où un seul type de rayonnement est considéré (photons X ou $\gamma$, électrons et neutrons). En pratique, ces trois rayonnements peuvent apparaître simultanément, de sorte qu'une séparation des différentes contributions est nécessaire pour en déduire l'effet biologique global.

Dans la pratique, un grand nombre de capteurs et de filtres (jusqu'à 6) sont nécessaires afin d'isoler les différentes contributions en énergies pour tout type de rayonnement. Si l'on souhaite concevoir des capteurs à fibre optique, il est souhaitable de minimiser le nombre de capteurs et donc également le nombre de fibres par point de mesure.

La présente invention concerne notamment un dosimètre gamma, satisfaisant à la norme CEI 61066 pour la mesure de la dose profonde Hp(10) dans un environnement gamma.

D'une façon générale, ce dosimètre doit être associé à un ou plusieurs dosimètres béta, notamment pour les hautes énergies d'électrons (supérieures à 1 MeV), et à un dosimètre de neutrons pour en déduire le flux global dans les conditions particulières des installations neutroniques telles que les réacteurs nucléaires et les sources de neutrons.

On connaît déjà des dosimètres optiques à absorption. A ce sujet, on se reportera au document [1] qui, comme les autres documents cités par la suite, est mentionné à la fin de la présente description. Le capteur décrit dans ce document est présenté comme permettant de mesurer une dose équivalente à un tissu et ne comporte pas de boîtier de compensation de l'énergie des photons.

On connaît aussi des dosimètres thermoluminescents. A ce sujet, on se reportera aux documents [2] à [5] dans lesquels il n'est pas non plus question d'un boîtier de compensation.

On connaît en outre, par le document [6], un dispositif de mesure à distance de débit de dose de rayonnement X. Les utilisateurs de ce dispositif sont censés connaître les énergies des photons émis par la source d'irradiation du dispositif ainsi que le facteur de sur-réponse engendré, de sorte qu'aucun moyen de compensation de l'énergie des photons n'est prévu.

On connaît également des dosimètres à luminescence stimulée optiquement ou dosimètres OSL. A ce sujet on se reportera aux documents [7] à [9]. Dans ces documents, il n'est pas non plus question d'un dispositif de compensation de l'énergie des photons.

On connaît aussi un autre dosimètre OSL par le document [10] mais aucun boîtier de compensation n'est décrit dans ce document.

On se reportera en outre au document [11] qui décrit un dispositif de détection de rayonnement à distance. Mais aucun moyen de compensation de l'énergie du rayonnement n'est prévu dans ce dispositif.

On connaît également des dosimètres comprenant des moyens de compensation.

On se reportera en particulier au document [12] qui décrit un dosimètre utilisant un film photographique. Cependant un tel film ne permet pas de faire une mesure en temps réel. De plus, le dosimètre est sensible à la température, à l'humidité et à l'angle d'incidence des rayonnements.

On se reportera aussi aux documents [13] à [15] qui concernent respectivement un dosimètre thermoluminescent, un dosimètre radiophotoluminescent et un dosimètre à semiconducteurs.

En ce qui concerne la luminescence stimulée optiquement, on se reportera aussi aux documents [16] à [20].

En fait, on ne connaît aucun capteur de rayonnement dont la conception serait semblable à celle des dispositifs connus par les documents [1] à [11] et qui incorporerait des moyens prévus pour compenser l'énergie des photons incidents et l'angle d'incidence de ces photons, comme on en trouve dans les documents [12] à [20].

Un capteur de rayonnement pour la dosimétrie est connu de US4142101. Un autre capteur de rayonnement pour la dosimétrie est connu de WO9928764 décrivant un premier écran devant le capteur est un deuxième écran à la périphérie, les deux écrans étant en plomb ou en étain.

## EXPOSÉ DE L'INVENTION

La présente invention a pour but de remédier à cet inconvénient en proposant un capteur de rayonnement, que l'on peut connecter à une fibre optique pour la dosimétrie à distance, ce capteur permettant de compenser l'énergie du rayonnement incident ainsi que l'angle d'incidence de ce rayonnement.

L'invention propose en particulier un capteur optique miniature, que l'on éloigne des utilisateurs en le connectant à une fibre optique, qui a un faible seuil de détection de dose et qui est capable de compenser l'énergie des photons incidents (norme CEI 61066) et de fonctionner sous diverses incidences angulaires.

Le matériau détecteur que comporte ce capteur est avantageusement de l'alumine $\alpha$, ou un verre de silice, mais d'autres matériaux peuvent être utilisés en modifiant légèrement les paramètres géométriques des écrans de compensation que comporte le capteur.

Ce dernier peut être connecté, par l'intermédiaire d'une fibre optique, à un dispositif de mesure de luminescence qui est avantageusement stimulée optiquement mais qui peut être également une radiophotoluminescence, voire une thermoluminescence induite par chauffage laser.

Ce dispositif de mesure de luminescence incorpore des moyens de mesure en temps réel des pertes optiques de la fibre optique de transmission afin de compenser les erreurs de mesure induites par les courbures, les pertes de connexion, voire le noircissement et le vieillissement de cette fibre.

Plus généralement, la présente invention concerne un capteur de rayonnement pour la dosimétrie, conformément à la revendication 1.

Selon un mode de réalisation particulier du capteur objet de l'invention, le matériau est apte à émettre le rayonnement de luminescence lorsqu'il est stimulé optiquement, le capteur étant ainsi un capteur de rayonnement à luminescence stimulée optiquement, le guide de lumière étant en outre prévu pour transporter un rayonnement de stimulation optique de l'élément et pour illuminer ce dernier avec ce rayonnement de stimulation optique.

De préférence, le matériau a un numéro atomique effectif voisin de 10.

Selon un mode de réalisation préféré du capteur objet de l'invention, l'axe de l'élément est un axe de symétrie de révolution pour cet élément.

De préférence, l'élément est entouré par une couche de réflexion du rayonnement de luminescence, par exemple un film d'aluminium.

Selon un premier mode de réalisation particulier du capteur, objet de l'invention, l'élément a une forme allongée suivant son axe et cylindrique de révolution autour de cet axe et le capteur comprend en outre un réflecteur du rayonnement de luminescence, le premier écran étant compris entre ce réflecteur et la première extrémité de l'élément, la deuxième extrémité de l'élément étant destinée à être optiquement couplée au guide de lumière, le deuxième écran s'étendant sur une longueur de l'élément à partir de la deuxième extrémité de cet élément, cette longueur dépendant de la géométrie de l'élément.

Selon un deuxième mode de réalisation particulier, le capteur comprend un ou une pluralité d'éléments faits du matériau de détection du rayonnement, un corps comprenant une cavité dans laquelle on trouve l'élément ou la pluralité d'éléments et dont la paroi est apte à réfléchir le rayonnement de luminescence, ainsi qu'une pièce comportant un perçage dont l'axe est l'axe de l'élément ou de la pluralité d'éléments et dont la paroi est apte à réfléchir le rayonnement de luminescence, cette pièce étant prévue pour collecter ce dernier et le conduire à l'entrée du guide de lumière souple, sous un angle compatible avec l'ouverture numérique de ce guide de lumière souple, lorsque ce dernier est couplé au capteur.

Le perçage est de préférence conique.

Le capteur peut comprendre en outre une lentille de focalisation entre l'élément ou la pluralité d'éléments et le perçage de la pièce.

Le matériau de détection du rayonnement peut être choisi dans le groupe comprenant les verres radiophotoluminescents de type phosphate, les verres luminescents du genre des verres photo-chromiques, les matériaux cristallins de détection du rayonnement, en particulier l'alumine dans la phase $\alpha$, les cristaux scintillants et les cristaux aptes à émettre une luminescence stimulée optiquement.

La présente invention concerne aussi un dispositif de dosimétrie comprenant le capteur objet de l'invention, un laser apte à émettre un rayonnement de stimulation de l'élément fait du matériau de détection du rayonnement et des moyens de détection du rayonnement de luminescence émis par cet élément.

Selon un mode de réalisation particulier du dispositif de dosimétrie, objet de l'invention, ce dispositif comprend en outre un premier photo-détecteur, un réflecteur apte à laisser passer moins de 10% du rayonnement émis par le laser vers ce premier photo-détecteur et à réfléchir plus de 90% de ce rayonnement vers le guide de lumière souple et un deuxième photo-détecteur destiné à détecter le rayonnement de luminescence émis par l'élément et transmis par le guide de lumière souple, le rapport des signaux fournis par les premier et deuxième photo-détecteurs permettant de mesurer les variations du rayonnement de stimulation transmis à l'élément à chaque interrogation de celui-ci.

## BRÈVE DESCRIPTION DES DESSINS

La présente invention sera mieux comprise à la lecture de la description d'exemples de réalisation donnés ci-après, à titre purement indicatif et nullement limitatif, en faisant référence aux dessins annexés sur lesquels :

- la figure 1 est une vue schématique d'un premier mode de réalisation particulier du capteur de rayonnement, objet de l'invention, connecté à l'extrémité d'une fibre optique et permettant la mesure de la dose $H_p$ (10)
- la figure 2 montre la réponse R1 du capteur de la figure 1, rapportée à $H_p$ (10), en fonction de l'énergie E des photons (en MeV), pour une incidence perpendiculaire à l'axe du capteur,
- la figure 3 montre la réponse R1 du capteur de la figure 1 rapportée à $H_p$ (10), en fonction de l'angle d'incidence $\alpha$ du rayonnement (en degrés), pour des photons de 60 keV,
- la figure 4 est une vue schématique d'un deuxième mode de réalisation particulier du capteur de rayonnement objet de l'invention, connecté à l'extrémité d'une fibre optique,
- la figure 5 montre la réponse R2 du capteur de la figure 4, rapportée à $H_p$ (10), en fonction de l'énergie E des photons (en MeV), pour une incidence perpendiculaire à l'axe du capteur,
- la figure 6 montre la réponse R2 du capteur de la figure 4, rapportée à $H_p$ (10), en fonction de l'angle d'incidence $\alpha$ du rayonnement (en degrés), pour des photons de 60 keV,
- la figure 7 montre les variations du rapport Rd de la dose déposée par des électrons à la dose déposée par des photons gamma, en fonction de l'énergie E (en MeV), pour le capteur de la figure 1 (courbe I) et pour le capteur de la figure 2 (courbe II), à nombre de particules constant,
- la figure 8 est une vue schématique d'un mode de réalisation particulier du dispositif de dosimétrie objet de l'invention, et
- la figure 9 montre les variations de l'intégrale Is du signal OSL (en coups par seconde) en fonction de la dose D de rayonnement gamma (en mGy), pour le dispositif de la figure 8 connecté à un capteur du genre de la figure 4 par une fibre optique en silice de 20m de long.

## EXPOSÉ DÉTAILLÉ DE MODES DE RÉALISATION PARTICULIERS

Un exemple de capteur de rayonnement X ou gamma conforme à l'invention, que l'on peut éloigner des utilisateurs en le connectant à une fibre optique, présente un seuil de détection amélioré par rapport aux capteurs connus, mentionnés plus haut, pour lesquels le seuil est de l'ordre de 1 mGy.

Il s'agit d'un capteur OSL qui met en oeuvre un matériau détecteur transparent afin d'accroître le volume de détection sondé optiquement, tel que cela est décrit dans le document [11].

Toutefois, par opposition à ce document [11], la réponse de ce capteur à une dose est compensée vis-à-vis des énergies des photons de sorte qu'il n'est pas nécessaire de connaître a priori ces énergies, voire le spectre de ces photons, pour utiliser ce capteur, ce qui est le cas de la plupart des applications en radioprotection.

Le dispositif de dosimétrie optoélectronique, auquel est connecté ce capteur, utilise une technique de compensation des pertes en ligne permettant de corriger l'influence d'une perte optique sur la mesure du signal OSL, voire de déclencher une alarme si les pertes sont trop importantes.

Pour la dosimétrie du personnel, ce capteur conforme à l'invention permet une détection indépendante de l'énergie des photons (de 15 keV jusqu'à 3 MeV) selon une ouverture angulaire aussi grande que possible (au moins $\pm$ 60°). L'angle solide opérationnel pour le capteur vaut $2\pi$ (1-cosB) où B est le demi-angle d'ouverture. L'espace tout entier correspond à $4.\pi$ stéradians.

La norme se rapporte aux capteurs plans du marché pour lesquels l'angle d'ouverture est au moins de $\pm$ 60° (angle solide égal à $\pi$ stéradians). Les capteurs plans sont donc opérationnels sur un angle solide de $2.\pi$ sur leurs deux faces.

Le capteur OSL conforme à l'invention permet une mesure angulaire sur environ $\pm$ 155° à $\pm$ 180° par symétrie cylindrique autour de l'axe du capteur. L'angle solide correspondant est de l'ordre de $3,8.\pi$ (95 % de l'espace total), ce qui correspond à une meilleure performance angulaire que ce qui existe actuellement sur le marché pour les dosimètres relatifs compensés (RPL, TL,OSL).

Le tableau qui suit donne les angles solides opérationnels pour divers capteurs et permet de comparer les performances d'ouverture angulaire des dosimètres équivalents-tissus ou satisfaisant à la norme CEI 61066.

| Capteur | Angles | Angle solide |
|---|---|---|
| Chambre | $\pm$ 180 °; $\pm$ 180 ° | $4.\pi$ |
| Capteur plan (par exemple TLD, RPL) | $\pm$ 60 °; $\pm$ 60 ° | $2.\pi$ |
| Capteur OSL | $\pm$ 180 °; $\pm$ 155 ° | $3,8.\pi$ |

On propose dans ce qui suit deux modes de réalisation particuliers du capteur de rayonnement, objet de l'invention, qui peuvent être connectés à une fibre optique et sont prévus pour compenser les énergies des photons incidents et les angles d'incidence de ceux-ci.

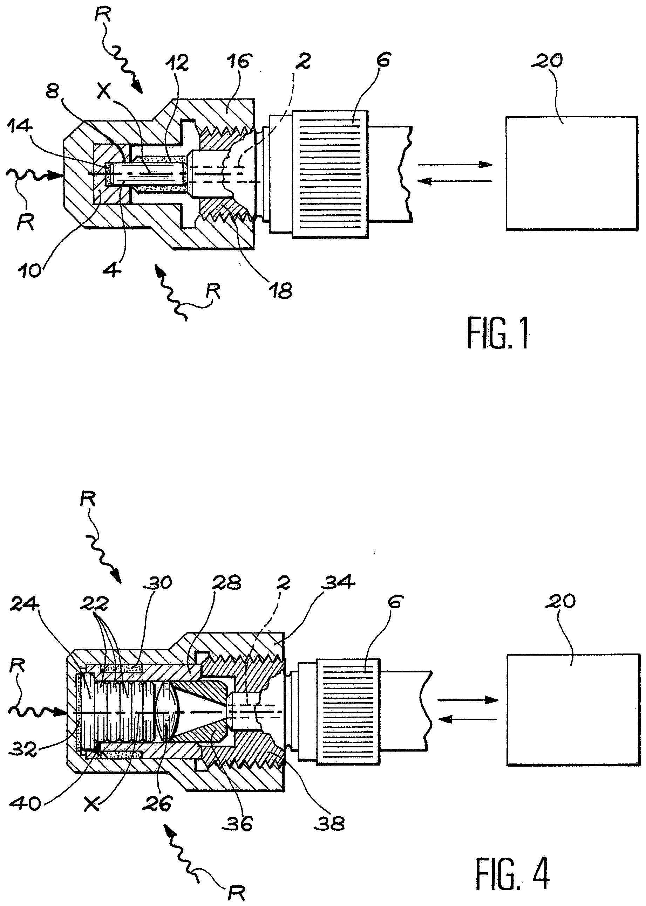

Les exemples donnés en faisant référence aux figures 1 et 4 comprennent des moyens de réflexion de la lumière de stimulation (par exemple film d'aluminium ou miroir), permettant de faire interagir la lumière un grand nombre de fois, par des réflexions multiples, afin de diminuer le temps de remise à zéro du matériau détecteur de rayonnement. Dans tous ces exemples, les capteurs sont rendus étanches à la lumière ambiante.

Tous les moyens de compensation décrits sont prévus pour être appliqués à la dosimétrie par Luminescence Stimulée Optiquement. Ils sont néanmoins transposables à d'autres modes de dosimétrie employant le même matériau (par exemple l'alumine) et notamment à la thermoluminescence.

Par ailleurs, les matériaux mis en oeuvre dans les exemples des figures 1 et 4, notamment ceux qui constituent les écrans, peuvent être modifiés.

Les moyens de compensation décrits utilisent des écrans sous forme de tubes d'étain (12, 30) sans perforations, dont le coefficient de recouvrement est choisi pour satisfaire à la norme de compensation : ce coefficient est de l'ordre de 6/10 à 7/10 selon la géométrie du cristal.

Cette valeur déterminante est calculée par modélisation à l'aide d'un logiciel utilisant une méthode de Monte-Carlo (MCNP, EGS4,Penelop), en ne prenant pas l'hypothèse selon laquelle toute l'énergie des électrons est déposée dans le cristal. Il est nécessaire de faire le bilan électronique complet, notamment en prenant en compte les électrons secondaires. La valeur issue du calcul est validée ou ajustée par quelques essais.

Il est également possible d'employer des écrans par exemple en plomb ou en indium au lieu des écrans d'étain. Toutefois, l'étain est préférable car il ne présente pas de pics d'absorption X (bande K) dans le domaine d'énergie compensé.

Par ailleurs, il est possible d'utiliser des écrans sous forme de tubes perforés du genre de ceux qui sont utilisés pour des opérations de filtrage et par exemple commercialisés par les sociétés Arcor Inc. et Perforated Tubes Inc. Le rapport de la surface non perforée à la surface totale d'un tube correspond alors au coefficient de recouvrement décrit précédemment. Les tubes perforés recouvrent alors l'intégralité du matériau détecteur.

L'exemple de la figure 1 concerne un capteur utilisant un couplage direct entre la fibre optique et le matériau détecteur.

Le capteur de la figure 1, de symétrie cylindrique (autour de l'axe X de la fibre optique 2), incorpore un cristal détecteur 4 (ou un ensemble de cristaux détecteurs) par exemple en alumine, formant un cylindre de révolution autour de l'axe X. L'assemblage représenté sur la figure 1 est conçu pour un cristal détecteur de 5 mm de long et de 1,5 mm de diamètre.

La fibre 2 est avantageusement une fibre en silice de 1 mm de diamètre et d'ouverture numérique de l'ordre de 0,5, le demi-angle d'acceptance air-silice étant ainsi de l'ordre de 30°. A titre purement indicatif et nullement limitatif, cette fibre est celle qui est commercialisée sous la référence TECS48 par la société 3M et son extrémité est pourvue d'un connecteur 6 selon le standard dénommé SMA. Ce connecteur 6 est fixé au capteur, comme on le voit, mais ce capteur peut être séparé du connecteur et donc de la fibre optique quand cela est nécessaire.

La luminescence stimulée optiquement (voire la thermoluminescence ou la scintillation ou la radiophotoluminescence) est renvoyée dans la fibre optique 2 après réflexion sur un film métallique 8, avantageusement en aluminium et de l'ordre de 50 micromètres d'épaisseur, qui est enroulé autour du cristal 4. Ce film 8 permet également de réduire la quantité d'électrons secondaires atteignant le cristal ainsi que le nombre de particules de recul dans le cas d'un flux neutronique.

Le capteur de la figure 1 comporte aussi une entretoise cylindrique 10 en matière plastique, par exemple en polycarbonate, dont l'axe est l'axe X et qui est prévue pour guider le cristal détecteur. Cette entretoise porte un écran tubulaire cylindrique 12 d'axe X, en étain, d'environ 0,5 mm d'épaisseur, permettant de réaliser la compensation en énergie pour les irradiations R à peu près perpendiculaires à l'axe X du capteur.

Cet écran cylindrique 12 couvre environ 7/10 du cristal 4 c'est à dire une longueur de 3,5 mm.

De même, un écran d'étain 14 en forme de disque d'environ 0,2 mm d'épaisseur et de même diamètre que le cristal 4 est placé entre l'entretoise 10 et ce cristal afin de réaliser la compensation pour des irradiations R dont les incidences angulaires sont proches de l'axe X.

Il est également possible de rajouter un miroir plan rond (par exemple aluminisé) entre l'écran d'étain 14 et le cristal 4.

Le montage du capteur se fait en plaçant tout d'abord l'écran cylindrique 12 sur le cristal comme indiqué sur la figure. Ce placement est facilité par le fait que l'étain est un métal très ductile. Le cristal est ensuite inséré dans l'entretoise 10, et cette dernière est insérée dans le corps 16 du capteur. Ce corps est usiné dans un polymère thermodurcissable, par exemple de type polycarbonate, dopé pour être opaque à la lumière ambiante.

Il va de soi que ce corps doit atténuer le moins possible les rayonnements à détecter.

Le cristal est alors bloqué par un raccord fileté 18, par exemple en acier inoxydable, ce raccord recevant l'extrémité du connecteur 6 (portant l'extrémité de la fibre 2) et lui étant fixé et étant aussi vissé dans le corps 12 du capteur.

Le contact mécanique est exercé par le connecteur directement sur le cristal par un liquide adaptateur d'indice pour limiter les pertes optiques par réflexion de Fresnel.

Après montage du capteur et fixation de ce dernier au connecteur 6, le signal OSL renvoyé par le capteur est étalonné par rapport à une ou plusieurs sources de rayonnement dont les activités sont connues.

On voit sur la figure 1, des moyens 20 prévu pour engendrer un rayonnement de stimulation du cristal (transmis à ce dernier par la fibre optique), détecter la luminescence du cristal ainsi excité, transmise aux moyens 20 par la fibre, et analyser cette luminescence.

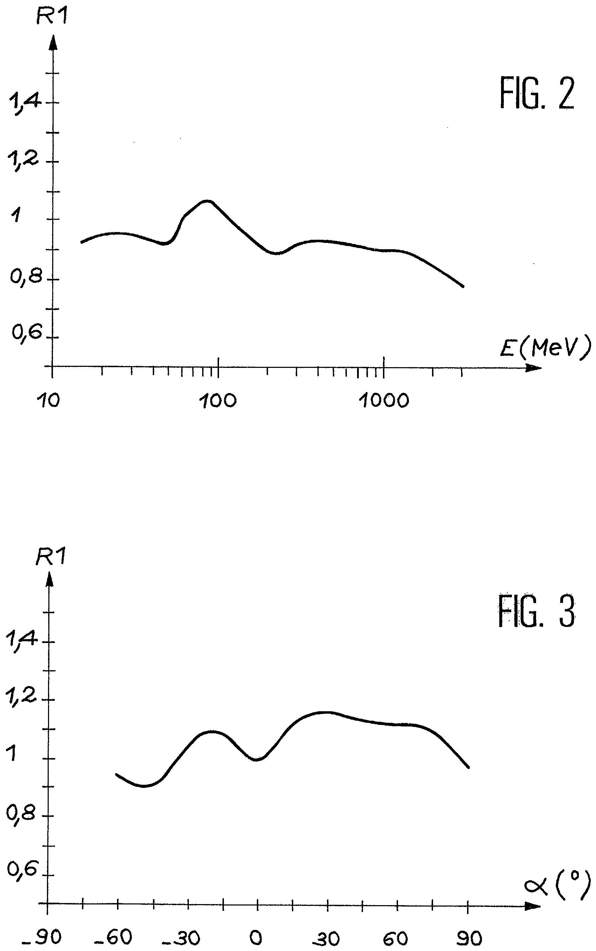

La réponse de ce capteur relative à la dose profonde a été calculée par un code du genre Monte-Carlo et représentée sur la figure 2 en fonction de l'énergie des photons, pour une irradiation perpendiculaire à l'axe X du capteur.

Le capteur de la figure 1 permet de réaliser une compensation en énergie sur une gamme d'énergie de photonique qui s'étend de moins de 15 keV jusqu'à 3 MeV car l'écart de réponse du capteur par rapport à la réponse étalonnée avec une source de 60Co (ou 137Cs) ne dépasse pas $\pm$ 30 %.

De même, la figure 3 représente la dépendance angulaire du capteur pour une énergie photonique de 60 keV (norme CEI 61066). La compensation en énergie satisfait cette norme (réponse stable à $\pm$ 15 %) pour un angle d'incidence variant de 90° (incidence suivant l'axe X de la fibre) à -60° en comptant ici l'angle d'incidence par rapport à une direction perpendiculaire à l'axe X.

L'ouverture angulaire permise par ce capteur est donc de $\pm$ 150°. Seul un demi-angle de 30° correspondant au raccord 18 et au connecteur 6 de la fibre n'est pas couvert. L'angle solide total correspondant vaut $3,74.\pi$ stéradians c'est à dire 93,5 % de l'espace total.

L'exemple de la figure 4 concerne un capteur utilisant un couplage indirect entre la fibre optique et le matériau détecteur.

Comme dans le cas de la figure 1, le capteur de la figure 4 est également de symétrie cylindrique autour d'un axe encore noté X. Il incorpore un ou plusieurs cristaux détecteurs (par exemple en alumine) également sous forme cylindrique: on utilise un cristal continu ou un assemblage de pastilles (en anglais "pellets") cristallines 22 (cas de la figure 4).

L'assemblage représenté sur la figure 4 est réalisé pour un cristal ou un ensemble de pastilles cristallines de 5 mm de long et de 5 mm de diamètre.

L'extrémité de la fibre optique 2 est également montée dans un connecteur 6 (comme dans le cas de la figure 1). La luminescence stimulée optiquement est renvoyée dans la fibre optique par l'intermédiaire d'un miroir 24 qui peut être un miroir aluminisé ou argenté voire à multicouches diélectriques (à 420 nm) et d'une lentille convergente 26, par exemple bi-convexe.

On voit sur la figure 4 que l'ensemble de pastilles 22 est compris entre le miroir 24 et la lentille 26, cette dernière étant du côté de l'extrémité la fibre 2. Le mode de collection de la lumière procède de la focalisation, en un même point dans la fibre, de la lumière provenant de tous les points à l'intérieur du "cristal" (ou plus exactement de l'ensemble des pastilles cristallines 22) mais selon des incidences angulaires identiques.

Le capteur comporte une entretoise cylindrique 28 en matière plastique, par exemple en polycarbonate, permettant de bloquer le miroir 24, de guider les pastilles détectrices 22 et de supporter un écran tubulaire cylindrique 30 en étain, d'environ 0,7 mm d'épaisseur, d'axe X, permettant de réaliser la compensation en énergie pour les irradiations R à peu près perpendiculaires à l'axe X du capteur.

Cet écran cylindrique 30 couvre environ les 3/5 de l'ensemble de pastilles 22 c'est à dire une longueur de 2,9 mm. De même, un écran d'étain 32 en forme de disque d'environ 0,2 mm d'épaisseur et de même diamètre que le miroir 24 est placé entre le corps 34 du capteur et ce miroir 24.

Le montage du capteur de la figure 4 se fait en plaçant tout d'abord les écrans en étain 30 et 32 à l'intérieur de logements prévus à cet effet dans le corps et l'entretoise. Le miroir 24 est ensuite inséré dans un logement prévu à cet effet dans l'entretoise. Cette entretoise munie du miroir est ensuite insérée dans le corps du capteur, par exemple en polycarbonate.

On insère alors le "cristal détecteur" (ensemble de pastille 22), la lentille 26 par exemple verre BK7 et un cône d'injection 36, par exemple en aluminium, ou plus précisément une pièce 36 pourvue d'un perçage conique d'axe X et disposée à la suite de la lentille 26 pour se trouver entre cette dernière et l'extrémité de la fibre, le perçage étant prévu pour amener la luminescence des pastilles, focalisée par la lentille, vers l'extrémité de la fibre.

L'ensemble obtenu est alors bloqué par un raccord fileté 38, par exemple en acier inoxydable, ce raccord recevant l'extrémité du connecteur 6 par exemple de type SMA (portant l'extrémité de la fibre) et lui étant fixé et étant aussi vissé dans le corps 34 du capteur.

On utilise la même fibre 24 que dans le cas de la figure 1.

Il est souhaitable d'enrober le cristal détecteur (ensemble des pastilles 22) d'une pellicule ou film d'aluminium 40 d'environ 50 $\mu$m d'épaisseur afin de réduire le flux d'électrons secondaires émis par les filtres formés par les écrans en étain et d'augmenter la proportion de lumière renvoyée vers la fibre.

Il est possible d'enlever la lentille 26 et de collecter la lumière directement au travers du cône d'injection 36. Ce mode de collection de la lumière est complémentaire du mode décrit précédemment en ce sens que la lumière injectée dans la fibre provient de tous les points à l'intérieur du cristal, ou de l'ensemble de pastilles 22, mais selon des incidences angulaires variables.

En raison du principe de conservation de l'étendue géométrique, ces deux modes sont utilisables.

L'utilisation de la lentille 26 permet toutefois un bon recouplage, dans la fibre, de la lumière réfléchie par le miroir plan 24.

Quel que soit le mode utilisé, toute la lumière émise ne peut être collectée en une seule fois et il est avantageux de métalliser, par exemple par un film d'aluminium, l'intérieur de l'entretoise 28 afin d'augmenter la collection de lumière par des réflexions multiples.

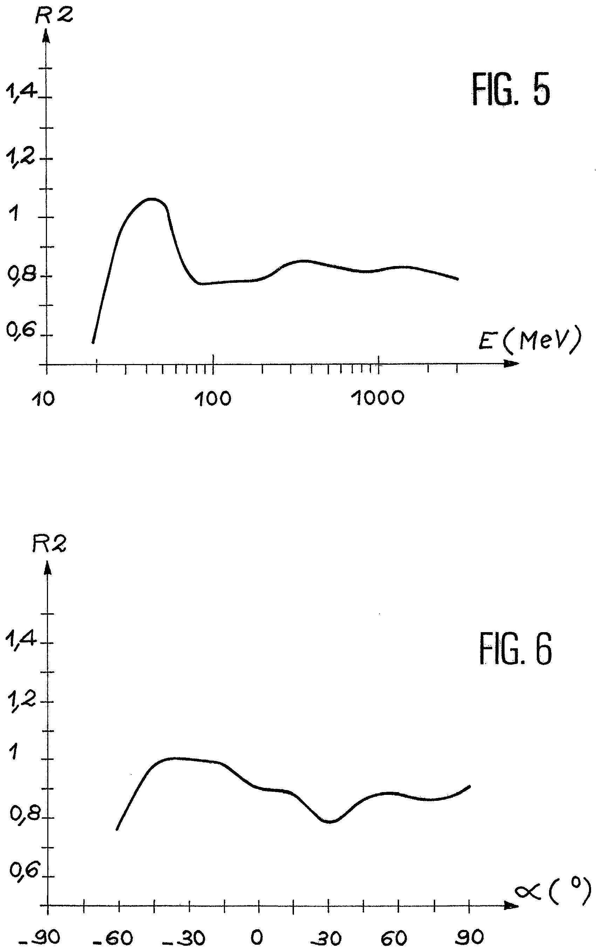

La réponse de ce capteur relative à la dose profonde a été calculée par un code du genre Monte-Carlo et représentée sur la figure 5 en fonction de l'énergie des photons et pour une irradiation perpendiculaire à l'axe X du capteur.

Le capteur de la figure 4 permet de réaliser une compensation en énergie sur une gamme d'énergie photonique qui s'étend de 20 keV jusqu'à 3 MeV car l'écart de réponse du capteur par rapport à la réponse étalonnée avec une source de 60Co (ou 137 Cs) ne dépasse pas $\pm 30\%$.

Pour ce capteur, la compensation en énergie photonique s'étend en fait beaucoup plus loin que 3 MeV et excède les prescriptions de la norme.

De même, la figure 6 représente la dépendance angulaire du capteur pour une énergie photonique de 60 keV. La compensation en énergie satisfait la norme CEI 61066 (réponse stable à $\pm$ 15 %) pour un angle d'incidence variant de 90° (incidence suivant l'axe X de la fibre) à -65°.

L'ouverture angulaire permise par ce capteur est donc de $\pm$ 155 °. Seul un demi-angle de 25° correspondant au raccord 38 et au connecteur 6 de la fibre n'est pas couvert. L'angle solide total correspondant vaut $3,8.\pi$ stéradians c'est à dire 95 % de l'espace total.

Les capteurs conformes à l'invention des figures 1 et 4 sont optimisés pour une irradiation photonique et ont également une réponse aux rayonnements béta susceptibles d'apparaître dans certaines applications industrielles.

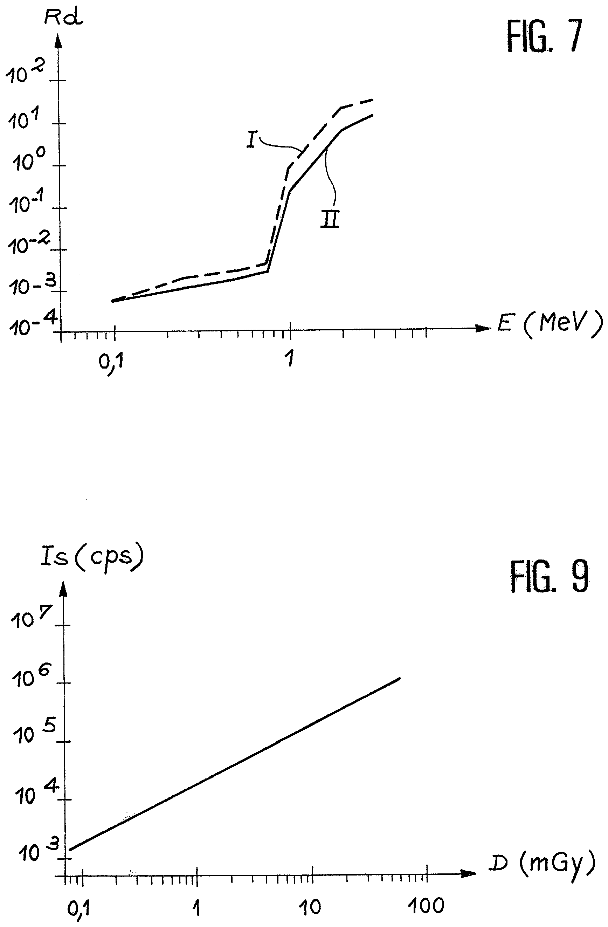

Chacun des capteurs gamma placés dans un champ d'irradiation mixte béta-gamma présente une sensibilité croisée aux rayonnements béta dont la proportion est représentée sur la figure 7.

Jusqu'à des énergies de rayonnement béta de l'ordre de 800 keV, la dose déposée par un électron est de l'ordre de 1 millième à 2 millièmes de la dose déposée par un photon de même énergie.

Il s'ensuit que si ces capteurs sont placés dans un champ d'irradiation mixte, d'activités béta - gamma équivalentes, il est possible de négliger l'influence électronique jusqu'à des énergies de l'ordre de 800 keV car la perturbation d'origine électronique est plus faible ou de même ordre de grandeur que la précision de mesure du dosimètre.

Ce seuil correspond, d'une part, à l'énergie nécessaire pour qu'un électron traverse la paroi de polycarbonate et, d'autre part, correspond à une augmentation importante de rayonnement de freinage des électrons. En contrepartie, cette influence électronique doit être prise en compte si l'énergie électronique excède 800 keV où si l'activité béta est plus de 100 fois supérieure à l'activité gamma.

Dans ce cas, en plus du capteur de rayonnement gamma, il faut utiliser un ou plusieurs autres capteurs sensibles au rayonnement béta afin de soustraire cette influence. Ce capteur doit alors être compensé en énergie relativement aux doses profonde et superficielle et la description d'un tel capteur sort du domaine considéré dans le document [12].

En revenant aux capteurs des figures 1 et 4, on précise que la fibre optique 2 peut être montée sur un tel capteur ou dissociée de ce dernier à volonté, grâce au connecteur associé au raccord 18 ou 38.

Le film réflecteur (8 ou 40) peut être enroulé sur le cristal (4 ou 22) ou déposé sous vide.

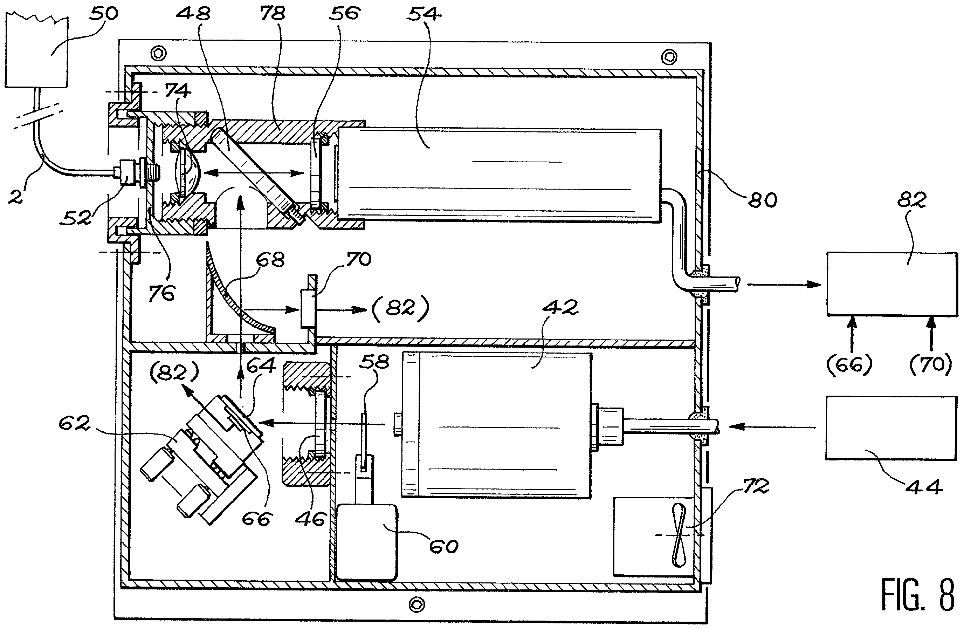

On décrit maintenant un mode de réalisation particulier du dispositif de dosimétrie, objet de l'invention, en faisant référence à la figure 8.

Pratiquement, la compensation est d'autant plus difficile à atteindre que le Z du matériau détecteur est différent du Z du tissu humain (proche de 7,2). Le schéma de compensation est donc dépendant du matériau détecteur.

Dans l'exemple considéré, le matériau détecteur est un cristal d'alumine en phase $\alpha$ qui présente une excellente sensibilité OSL (voir les documents [17] à [20]), une bonne transparence optique, permettant d'assurer une bonne collection de la lumière, un Z effectif de l'ordre de 10 et une perte de signal (en anglais "fading") très faible à la température ambiante. De plus, le cristal d'alumine est abondamment employé en dosimétrie et son coût de fabrication est faible.

Ce principe de compensation peut être appliqué à d'autres matériaux ayant des Z équivalents, tels que la silice, mais peut aussi être transposé à des matériaux différents en adaptant les paramètres géométriques de ces matériaux (notamment l'épaisseur des écrans et le taux de recouvrement de l'écran périphérique).

Le dispositif de dosimétrie ou système opto-électronique de lecture de Luminescence Stimulée Optiquement, qui est schématiquement représenté sur la figure 8, est similaire, quant à son principe, aux systèmes décrits dans les références [3] à [7].

Ce système, qui fonctionne en continu, comprend essentiellement un laser YAG-doublé (à 532 nm) qui a la référence 42 sur la figure 8 est qui est commandé par des moyens appropriés 44, un ensemble 46 de filtres permettant notamment de supprimer les longueurs d'ondes situées dans l'ultraviolet et dans l'infra-rouge (à 1064 nm), et une lame dichroïque 48.

Celle-ci permet, d'une part, de renvoyer la lumière de stimulation (à 532 nm), émise par le laser 42, vers le capteur 50, du genre du capteur de la figure 1 ou 4, par l'intermédiaire de la fibre optique 2 pourvue en son autre extrémité d'un autre connecteur 52 permettant sa connexion au dispositif de dosimétrie et, d'autre part, de transmettre la luminescence stimulée optiquement (à 420 nm); issue du capteur 50, vers un photo-détecteur 54, par exemple un photomultiplicateur, au travers d'un ensemble de filtres passe-bas 56 (permettant la suppression de la lumière laser résiduelle).

Avantageusement, la fibre optique 2 est une fibre en silice de 1 mm de diamètre et de forte ouverture numérique (typiquement 0,5). Elle permet d'éloigner le capteur 50 de quelques dizaines de mètres du dispositif de dosimétrie. Typiquement, sur 20 mètres, la lumière de stimulation est atténuée d'un facteur 2 tandis que le signal OSL est atténué d'un facteur 10.

Il a été observé expérimentalement que la remise à zéro du matériau requiert une densité d'énergie de l'ordre de 100 J/cm$^2$. Cette densité d'énergie est obtenue par une insolation de 50 mW sur un diamètre de 5 mm pendant une durée de 5 minutes.

Puisque le matériau détecteur est transparent, il est intéressant de faire passer le faisceau de stimulation plusieurs fois dans le matériau afin de diminuer la puissance de stimulation nécessaire et le temps de remise à zéro.

Le dispositif de la figure 8 comprend en outre un dispositif de compensation des pertes optiques de la ligne (ces pertes pouvant être induites par des courbures, par dégradation des connecteurs, ou par noircissement de la ligne optique du fait de l' irradiation) et un dispositif de commande de faisceau comprenant un obturateur ("shutter") 58 et un électroaimant 60 de commande de cet obturateur.

Le dispositif de compensation comporte un ensemble mécanique réglable angulairement 62, portant un miroir semi-réfléchissant 64 placé devant une photodiode 66 et prélevant une partie du signal de stimulation (typiquement 5 %).

Le faisceau restant (typiquement 95% du signal de stimulation) passe au travers d'un miroir paraboloïde 68 hors-d'axe (en anglais "off-axis") permettant de recueillir la lumière de stimulation après un aller-et-retour par l'intermédiaire de la fibre optique 2 et de la focaliser sur une autre photodiode 70.

On est ainsi capable de former le rapport du signal collecté par la photodiode 70 au signal collecté par la photodiode 66 pour en déduire la transmission de la ligne au cours de l'utilisation du dispositif de la figure 8.

Par comparaison avec une valeur de transmission mesurée lors du calibrage de dose de l'appareillage (transmission de la ligne au temps zéro), il est possible de corriger l'influence de pertes optiques induites par la ligne de mesure sur la mesure de la dose faite à distance.

On précise en outre que l'on voit sur la figure 8 un ventilateur 72 destiné à refroidir le dispositif, une lentille 74 permettant la focalisation, sur l'extrémité de la fibre 2, de la lumière issue de la lame dichroïque 48, une chicane 76 prévue pour ajuster la focalisation de la lumière dans la fibre tout en assurant l'étanchéité (optique), un support de centrage 78 prévu pour supporter et auto-centrer les composants 52, 74, 54, divers moyens de support, éventuellement réglables, des organes du dispositif de la figure 8, en particulier un boîtier 80, et des moyens 82 de traitement des signaux fournis par le photomultiplicateur 54 et les photodiodes 66 et 70, notamment pour calculer le rapport mentionné plus haut.

On voit en particulier sur la figure 8 qu'un écran optique est formé autour du laser 42 et ne laisse passer, grâce à un trou prévu à cet effet, que le faisceau laser destiné à traverser l'ensemble de filtres 46 (lorsque l'obturateur 58 est ouvert).

Au temps $t_0$, le dispositif de dosimétrie équipé de son capteur 50 est étalonné par rapport à une source dont l'énergie et l'activité sont connues. Le rapport Iret/Im est connu au temps zéro où Iret et Im sont déterminés après calibrage.

Si le dispositif n'est pas ouvert et modifié entre-temps, toute modification ultérieure (en fonctionnement) de ce rapport traduit une modification de transmission (aller-et-retour) entre le boîtier 80 et le capteur 50. La transmission est donc estimée par le rapport :

$$T^2 = \frac{\left( \dfrac{\text{Iret}}{\text{Im}} \right)}{\left( \dfrac{\text{Iret}}{\text{Im}} \right)_{t_0}}$$

A titre d'exemple, une perte de 10 % de transmission se traduit par un facteur de transmission T de 0,9.

Le signal OSL est par ailleurs mesuré, soit en repérant l'amplitude du pic, soit en intégrant la totalité de la courbe. Cette deuxième option est préférée car l'intégrale du signal (énergie déposée) est indépendante de la puissance du laser de stimulation et la statistique est meilleure (plus grand nombre de coups par minute).

A ce signal se superpose un fond continu composé en partie d'un fond lumineux non filtré et du bruit thermique du photo-détecteur 54. Ce fond continu, noté "offset" ci-dessous, est mesuré après l'impulsion laser et soustrait au signal I(t) capté par le photo-détecteur 54. La valeur de la dose est déduite de l'intégration de ce signal ainsi corrigé, pondérée par un facteur d'étalonnage C (en mGy/cps) et par le facteur de transmission T selon la formule :

$$dose = C \cdot \frac{\int (I(t) - offset)dt}{T}$$

La figure 9 montre la linéarité et la reproductibilité, en fonction de la dose D, de la réponse Is du dosimètre. Le dispositif décrit présente expérimentalement une limite de détection de l'ordre de 50 µGy pour une longueur de fibre de 20 mètres.

La précision est d'autant moins bonne que la dose est faible car la statistique de comptage est alors moins bonne. A titre d'exemple, l'erreur relative sur la mesure de dose est d'environ ± 15 % à 0,1 mGy.

On donne dans ce qui suit des applications de la présente invention.

Des capteurs à fibre optique conforme à l'invention, déportés par fibre optique peuvent être utilisés pour la détection de rayonnements et en radioprotection.

En ce qui concerne la détection de rayonnements, ils peuvent par exemple être utilisés pour le suivi d'assainissement de sites nucléaires.

A titre d'exemple, ils peuvent être insérés dans des conduites de faible diamètre (typiquement 10 mm à 15 mm selon les conceptions), permettant ainsi de faire des relevés d'activité, en temps réel, dans des zones inaccessibles à des capteurs traditionnels.

Ils peuvent également être laissés sur place et interrogés à distance, à périodes fixes ou variables, pour la détection d'accidents (fuites radioactives par exemple).

Toutefois, la compensation en énergie et en incidence angulaire trouve son application idéale en radioprotection pour la surveillance du personnel opérant sous radiation. L'intérêt d'un capteur conforme à l'invention tient à son très grand angle opérationnel (± 150 °, soit 95 % de l'espace total).

Un tel capteur peut alors être porté par un opérateur du secteur nucléaire afin de surveiller, à des périodes choisies par le service de radioprotection, la dose reçue par cet opérateur.

Un tel capteur peut également être utilisé en radiographie médicale.

Outre les applications du secteur nucléaire, ces capteurs compensés peuvent trouver des applications en radiothérapie, par exemple pour le suivi externe ou in-vivo des doses localisées sur des tumeurs cancéreuses d'un patient sous irradiation (débits de dose locale très élevés, de l'ordre de quelques grays par minute).

Le médecin dispose alors de l'évolution de la dose des tissus (quelles que soient les énergies de photon utilisées et quel que soit le spectre en énergie) et peut optimiser l'irradiation de la tumeur en temps réel, en ménageant les tissus environnants.

Ces capteurs permettent également de suivre les doses reçues au niveau des mains par un chirurgien opérant sous rayons X et ce quelle que soit l'énergie du rayonnement X utilisé, qui peut être plus ou moins pénétrant.

Les documents cités dans la présente description sont les suivantes :

**[1]** F. Hasing, F. Pfeiffer, H. Büker, WO 97/21112

**[2]** A. Huston, B. Justus, US 5,606,163,

**[3]** A.L. Huston, B. L. Justus, T. L. Johnson, Appl. Phys. Lett., 68 (24), 1996, pp. 3377-3379

**[4]** B. Justus, A. Huston, US 6,140,651

**[5]** P. F. Braunlich, W. Tetzlaff, J.E. Hegland, S.C. Jones, US 4,999,504

[6] K. A. Spanswick, US 5,905,262

[7] P. K. Soltani, Ch. Y. Wrigley, G. M. Storti, R. E. Creager, Fiber Optic radiation dosimetry, SPIE, vol. 1169, Fiber Optic and Laser Sensors VII, 1989, pp. 540-551

**[8]** R.E. Creager, P. K. Soltani, , US 5,091,653

[9] J. Lindmayer, C. Y. Wrigley, US 5,030,834

[10] B.L. Justus, Rad. Prot. Dos., vol. 81, n°1, 1999, p. 5

[11] J.C. Thèvenin, US 5,640,017 correspondant à EP 0678757 et à FR 2 718 852

**[12]** R. Pannetier, Vade-Mecum du technicien nucléaire, Seconde édition, Ed. S.C.F du Bastet, tome III, 1982

[13] A.S. Pradhan and R.C. Bhatt, Nuclear Instruments and Methods , vol. 166 , 1979, pp. 497-501

[14] B. Burghardt, E. Piesch, H.-G. Rober and S. Ugi, Modern photon energy compensation filters for solid state dosemeters, Kerntechnik, vol. 55, n° 6, 1990, pp. 362-367

[15] P.H. Burgess, US 4,876,454,voir aussi US 5,059,801

[16] R. Craig Yoder, R. M. Creaney, US 6,127,685,

[17] S. McKeever, M.S. Akselrod, B.G. Markey, US 5,962,857,

[18] M. S. Akselrod, V.S. Kortov and E.A. Gorelovza, Rad. Prot. Dos., vol. 47, n° ¼, 1993, pp. 159-164

[19] B.G. Markey, L.E. Colyott and S.W.S. Mc Keever, Rad. Measurements, vol. 24, n° 4, 1995, pp. 457-463

[20] S.W.S Mc Keever, M.S. Akselrod, B.G. Markey, Rad. Prot. Dos., Vol. 65, n° ¼, 1996, pp. 267-272.

## Revendications

1. Capteur de rayonnement X et/ou gamma pour la dosimétrie, ce capteur comprenant au moins un élément (4, 22) fait d'un matériau de détection du rayonnement X et/ou gamma, cet élément ayant des première et deuxième extrémités et un axe qui rencontre ces première et deuxième extrémités, le matériau étant apte à émettre un rayonnement de luminescence et étant transparent à ce rayonnement de luminescence,
ce capteur étant **caractérisé en ce qu'**il comprend en outre des premier et deuxième écrans (12-14, 30-32) de filtrage du rayonnement X et/ou gamma, les premier et deuxième écrans étant en étain, en plomb ou en indium, le premier écran étant disposé en regard de la première extrémité de l'élément et destiné à filtrer le rayonnement X et/ou gamma qui arrive sur l'élément suivant une direction voisine de l'axe (X) de l'élément, le deuxième écran (12, 30) étant plus épais que le premier écran (14, 32), ce deuxième écran étant disposé à la périphérie de l'élément et destiné à filtrer le rayonnement qui arrive sur l'élément suivant une direction voisine d'une perpendiculaire à l'axe de l'élément,
ce capteur étant optiquement couplé à un guide de lumière souple (2), prévu pour recueillir et transporter le rayonnement de luminescence.

2. Capteur selon la revendication 1, dans lequel le matériau est apte à émettre le rayonnement de luminescence lorsqu'il est stimulé optiquement, le capteur étant ainsi un capteur de rayonnement à luminescence stimulée optiquement, le guide de lumière
(2) étant en outre prévu pour transporter un rayonnement de stimulation optique de l'élément et pour illuminer ce dernier avec ce rayonnement de stimulation optique.

3. Capteur selon l'une quelconque des revendications 1 et 2, dans lequel le matériau a un numéro atomique effectif voisin de 10.

4. Capteur selon l'une quelconque des revendications 1 à 3, dans lequel l'axe (X) de l'élément est un axe de symétrie de révolution pour cet élément.

5. Capteur selon l'une quelconque des revendications 1 à 4, dans lequel l'élément est entouré par une couche (8, 40) de réflexion du rayonnement de luminescence.

6. Capteur selon l'une quelconque des revendications 1 à 5, dans lequel l'élément (4) a une forme allongée suivant son axe (X) et cylindrique de révolution autour de cet axe et le capteur comprend en outre un réflecteur du rayonnement de luminescence, le premier écran (14) étant compris entre ce réflecteur et la première extrémité de l'élément, la deuxième extrémité de l'élément étant destinée à être optiquement couplée au guide de lumière, le deuxième écran (12) s'étendant sur une longueur de l'élément à partir de la deuxième extrémité de cet élément, cette longueur dépendant de la géométrie de l'élément.

7. Capteur selon l'une quelconque des revendications 1 à 5, comprenant un ou une pluralité d'éléments (22) faits du matériau de détection du rayonnement, un corps (34) comprenant une cavité dans laquelle on trouve l'élément ou la pluralité d'éléments et dont la paroi est apte à réfléchir le rayonnement de luminescence, ainsi qu'une pièce (36) comportant un perçage dont l'axe est l'axe de l'élément ou de la pluralité d'éléments et dont la paroi est apte à réfléchir le rayonnement de luminescence, cette pièce étant prévue pour collecter ce dernier et le conduire à l'entrée du guide de lumière souple, sous un angle compatible avec l'ouverture numérique de ce guide de lumière souple, lorsque ce dernier est couplé au capteur.

8. Capteur selon la revendication 7, dans lequel le perçage est conique.

9. Capteur selon l'une quelconque des revendications 7 et 8, comprenant en outre une lentille de focalisation (26) entre l'élément ou la pluralité d'éléments et le perçage de la pièce.

10. Capteur selon une quelconque des revendications 1 à 9, dans lequel le matériau de détection du rayonnement est choisi dans le groupe comprenant les verres radiophotoluminescents de type phosphate, les verres luminescents du genre des verres photo-chromiques, les matériaux cristallins de détection du rayonnement, en particulier l'alumine dans la phase α, les cristaux scintillants et les cristaux aptes à émettre une luminescence stimulée optiquement.

**11.** Dispositif de dosimétrie comprenant le capteur (50) selon une quelconque des revendications 1 à 10, un laser (42) apte à émettre un rayonnement de stimulation de l'élément fait du matériau de détection du rayonnement et des moyens de détection du rayonnement de luminescence émis par cet élément.

**12.** Dispositif selon la revendication 11, comprenant en outre un premier photo-détecteur (66), un réflecteur (64) apte à laisser passer moins de 10% du rayonnement émis par le laser vers ce premier photo-détecteur et à réfléchir plus de 90% de ce rayonnement vers le guide de la lumière souple et un deuxième photo-détecteur (70) destiné à détecter le rayonnement de luminescence émis par l'élément et transmis par le guide de lumière souple, le rapport des signaux fournis par les premier et deuxième photo-détecteurs permettant de mesurer les variations du rayonnement de stimulation effectivement transmis à l'élément à chaque interrogation de celui-ci.

**Patentansprüche**

**1.** Strahlungsdetektor für Röntgen- und/oder Gammastrahlung zur Dosimetrie, enthaltend zumindest ein Element (4, 22), das aus einem Detektormaterial zur Detektion von Röntgen- und/oder Gammastrahlung ausgebildet ist, wobei dieses Element ein erstes und ein zweites Ende und eine Achse aufweist, die auf dieses erste und zweite Ende auftrifft, wobei das Material dazu geeignet ist, eine Lumineszenzstrahlung zu emittieren und für diese Lumineszenzstrahlung durchlässig ist,
wobei dieser Detektor **dadurch gekennzeichnet ist, dass** er ferner einen ersten und einen zweiten Filterschirm (12 - 14, 30 - 32) zum Filtern der Röntgen- und/oder Gammastrahlung aufweist, wobei der erste und der zweite Schirm aus Zinn, Blei oder Indium besteht, wobei der erste Schirm dem ersten Ende des Elements gegenüberliegend angeordnet und dazu bestimmt ist, die Röntgen- und/oder Gammastrahlung zu filtern, die auf das Element in einer der Achse (X) des Elements benachbarten Richtung auftrifft, wobei der zweite Schirm (12, 30) dicker als der erste Schirm (14, 32) ist, wobei dieser zweite Schirm am Umfang des Elements angeordnet und dazu bestimmt ist, die Strahlung zu filtern, die auf das Element in einer Richtung benachbart zu einer Senkrechten zur Achse des Elements auftrifft,
wobei dieser Detektor optisch mit einem nachgiebigen Lichtleiter (2) gekoppelt ist, der dazu vorgesehen ist, die Lumineszenzstrahlung aufzunehmen und weiterzuleiten.

**2.** Detektor nach Anspruch 1, wobei das Material dazu geeignet ist, die Lumineszenzstrahlung zu emittieren, wenn es optisch stimuliert wird, wobei dieser Detektor somit ein Strahlungsdetektor für eine Strahlung optisch stimulierter Lumineszenz ist, wobei der Lichtleiter (2) ferner dazu vorgesehen ist, eine Strahlung zur optischen Stimulierung des Elements weiterzuleiten und letzteres mit dieser Strahlung zur optischen Stimulierung zu beleuchten.

**3.** Detektor nach einem der Ansprüche 1 und 2, wobei das Material eine effektive Ordnungszahl angrenzend an 10 hat.

**4.** Detektor nach einem der Ansprüche 1 bis 3, wobei die Achse (X) des Elements eine Rotationssymmetrieachse für dieses Element ist.

**5.** Detektor nach einem der Ansprüche 1 bis 4, wobei das Element von einer Reflexionsschicht (8, 40) zur Reflexion der Lumineszenzstrahlung umgeben wird.

**6.** Detektor nach einem der Ansprüche 1 bis 5, wobei das Element (4) eine entlang ihrer Achse (X) längliche und um diese Achse rotationszylindrische Form hat und der Detektor ferner einen Lumineszenstrahlungsreflektor aufweist, wobei der erste Schirm (14) zwischen diesem Reflektor und dem ersten Ende des Elements enthalten ist, das zweite Ende des Elements dazu bestimmt ist, optisch mit dem Lichtleiter gekoppelt zu werden, der zweite Schirm (12) sich über eine Länge des Elements ausgehend von dem zweiten Ende dieses Elements erstreckt und diese Länge von der Geometrie des Elements abhängt.

**7.** Detektor nach einem der Ansprüche 1 bis 5, enthaltend ein oder mehrere Elemente (22), die aus dem Detektionsmaterial zum Detektieren der Strahlung ausgebildet sind, wobei ein Körper (34) eine Vertiefung aufweist, in welcher das Element bzw. die Mehrzahl von Elementen vorliegen und dessen Wandung dazu geeignet ist, die Lumineszenzstrahlung zu reflektieren, sowie ein Teil (36), das eine Bohrung aufweist, deren Achse die Achse des Elements bzw. der Mehrzahl von Elementen ist und deren Wandung dazu geeignet ist, die Lumineszenzstrahlung zu reflektieren, wobei dieses Teil dazu vorgesehen ist, letztere zu sammeln und sie zum Eintritt des nachgiebigen Lichtleiters zu leiten, und zwar unter einem Winkel, der mit der numerischen Apertur dieses nachgiebigen Lichtleiters kompatibel ist, wenn letzterer mit dem Detektor gekoppelt ist.

**8.** Detektor nach Anspruch 7, wobei die Bohrung konisch verläuft.

**9.** Detektor nach einem der Ansprüche 7 und 8, ferner enthaltend eine Fokussierlinse (26) zwischen dem Element bzw. der Mehrzahl von Elementen und der Bohrung des Teils.

**10.** Detektor nach einem der Ansprüche 1 bis 9, wobei das Detektionsmaterial zur Detektion der Strahlung ausgewählt ist aus der Gruppe umfassend Radiophotolumineszenz-Gläser vom Typ Phosphat, Lumineszenz-Gläser von der Art photochrome Gläser, kristalline Materialien zur Detektion von Strahlung, insbesondere Aluminiumoxid in der Phase $\alpha$, Szintillatorkristalle und Kristalle, die dazu geeignet sind, eine optisch stimulierte Lumineszenz zu emittieren.

**11.** Vorrichtung zur Dosimetrie, enthaltend den Detektor (50) nach einem der Ansprüche 1 bis 10, einen Laser (42), der dazu geeignet ist, eine Stimulationsstrahlung zum Stimulieren des aus dem Strahlungsdetektionsmaterial ausgebildeten Elements zu emittieren, und Detektionsmittel zum Detektieren der von diesem Element emittierten Lumineszenzstrahlung.

**12.** Vorrichtung nach Anspruch 11, ferner enthaltend einen ersten Photodetektor (66), einen Reflektor (64), der dazu geeignet ist, zumindest 10 % der von dem Laser emittieren Strahlung zu diesem ersten Photodetektor durchzulassen und mehr als 90 % dieser Strahlung zum nachgiebigen Lichtleiter zu reflektieren, und einen zweiten Photodetektor (70), der dazu bestimmt ist, die von dem Element emittiere und durch den nachgiebigen Lichtleiter übertragene Lumineszenzstrahlung zu detektieren, wobei das Verhältnis der von dem ersten und dem zweiten Photodetektor bereitgestellten Signale gestattet, Änderungen der effektiv dem Element übertragenen Stimulationsstrahlung bei jedem Abfragen desselben zu messen.

**Claims**

**1.** X and/or gamma radiation sensor for dosimetry, this sensor comprising:

- at least one element (4, 22) made out of a X and/or gamma radiation detection material, wherein this element has first and second extremities and an axis where these first and second extremities meet, and the material is capable of emitting a luminescence radiation and is transparent to this luminescence radiation,
this sensor being **characterized in that** it also comprises first and second X and/or gamma radiation filter screens (12 - 14, 30 - 32), wherein the first and second screens are made of tin, lead or indium, the first screen is placed opposite the first extremity of the element that is intended to filter the X and/or gamma radiation that reaches the element along a direction adjacent to the axis (X) of the element, the second screen (12, 30) is thicker than the first screen (14, 32), and this second screen is placed at the periphery of the element and is intended to filter the X and/or gamma radiation that reaches the element along a direction adjacent to an axis that is perpendicular to the axis of the element.
whereby this sensor is capable of being optically coupled to a flexible light guide (2), designed to collect and convey the luminescence radiation.

**2.** Sensor according to claim 1, in which the material is capable of emitting the luminescence radiation when it is optically stimulated, wherein the sensor is thus an optically stimulated luminescence radiation sensor, and the light guide (2) is moreover provided to convey an optically stimulated radiation from the element and to illuminate this latter element with the optically stimulated radiation.

**3.** Sensor according to either of claims 1 and 2, in which the material has an effective atomic number close to 10.

**4.** Sensor according to any of claims 1 to 3, in which the axis (X) of the element is an axis of symmetry of revolution for this element.

**5.** Sensor according to any of claims 1 to 4, in which the element is surrounded by a luminescence radiation reflective layer (8, 40).

**6.** Sensor according to any of claims 1 to 5, in which the element (4) has a drawn out shape along its axis (X) and has a cylindrical shape revolving around this axis and the sensor comprises, in addition, a luminescence radiation reflector, wherein the first screen (14) is placed between this reflector and the first extremity of the element, the second extremity of the element being intended to be optically coupled to the light guide, the second screen (12) stretching out along the length of the element from the second extremity of this element, this length depending on the geometry of the element.

**7.** Sensor according to any of claims 1 to 5, comprising one or a plurality of elements (22) made out of radiation detection material, a body (34) comprising a cavity in which the element or the plurality of elements is located and thus the wall is capable of reflecting the luminescence radiation, as well as a part (36) comprising a boring whose axis is the axis of the element or the plurality of elements and thus the wall is capable of reflecting the luminescence radiation, this part being designed to collect this latter radiation and to convey it to the entry of the flexible light guide, under an angle that is compatible with the numerical aperture of this flexible light guide, when this guide is coupled to the sensor.

**8.** Sensor according to claim 7, in which the boring is a conical shape.

**9.** Sensor according to either of claims 7 or 8, comprising in addition a focalisation lens (26) between the element or the plurality of elements and the boring in the part.

**10.** Sensor according to any of claims 1 to 9, in which the radiation detection material is chosen among the group comprising phosphate type radiophotoluminescent glasses, photo-chromic type luminescent glasses, crystalline radiation detection materials, in particular alumina in the $\alpha$ phase, scintillating crystals and crystals capable of emitting an optically stimulated luminescence.

**11.** Dosimetry device comprising the sensor (50) according to any of claims 1 to 10, a laser (42) capable of emitting a stimulation radiation from the element made out of radiation detection material and means for detecting the luminescence radiation emitted by this element.

**12.** Device according to claim 11, comprising in addition a first photo-detector (66), a reflector (64) capable of allowing at least 10 % of the radiation emitted by the laser towards this first photo-detector to pass through and allowing more than 90 % of this radiation to be reflected towards the flexible light guide, and a second photo-detector (70) intended to detect the luminescence radiation emitted by the element and conveyed by the flexible light guide, wherein the ratio of signals provided by the first and second photodetectors allows the variations in the stimulation radiation effectively transmitted to the element to be measured each time this is interrogated.

FIG.1

FIG. 4

FIG. 2

R1

E(MeV)

FIG. 3

R1

α(°)

FIG. 5

FIG. 6

FIG. 7

FIG. 9

FIG. 8

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4142101 A
- WO 9928764 A
- WO 9721112 A, F. Hasing, F. Pfeiffer, H. Büker
- US 5606163 A, A. Huston, B. Justus
- US 6140651 A, B. Justus, A. Huston
- US 4999504 A, P. F. Braunlich, W. Tetzlaff, J.E. Hegland, S.C. Jones
- US 5905262 A, K. A. Spanswick
- US 5091653 A, R.E. Creager, P. K. Soltani

- US 5030834 A, J. Lindmayer, C. Y. Wrigley
- US 5640017 A, J.C. Thèvenin
- EP 0678757 A
- FR 2718852
- US 4876454 A, P.H. Burgess
- US 5059801 A
- US 6127685 A, R. Craig Yoder, R. M. Creaney
- US 5962857 A, S. McKeever, M.S. Akselrod, B.G. Markey

**Littérature non-brevet citée dans la description**

- **A.L. HUSTON ; B. L. JUSTUS ; T. L. JOHNSON.** *Appl. Phys. Lett.,* 1996, vol. 68 (24), 3377-3379
- **P. K. SOLTANI ; CH. Y. WRIGLEY ; G. M. STORTI ; R. E. CREAGER.** Fiber Optic radiation dosimetry, SPIE. *Fiber Optic and Laser Sensors VII,* 1989, vol. 1169, 540-551
- **B.L. JUSTUS.** *Rad. Prot. Dos.,* 1999, vol. 81 (1), 5
- **R. PANNETIER.** Vade-Mecum du technicien nucléaire. 1982
- **A.S. PRADHAN ; R.C. BHATT.** *Nuclear Instruments and Methods,* 1979, vol. 166, 497-501

- **B. BURGHARDT ; E. PIESCH ; H.-G. ROBER ; S. UGI.** Modern photon energy compensation filters for solid state dosemeters. *Kerntechnik,* 1990, vol. 55 (6), 362-367
- **M. S. AKSELROD ; V.S. KORTOV ; E.A. GORE-LOVZA.** *Rad. Prot. Dos.,* 1993, vol. 47 (¼), 159-164
- **B.G. MARKEY ; L.E. COLYOTT ; S.W.S. MC KEEVER.** *Rad. Measurements,* 1995, vol. 24 (4), 457-463
- **S.W.S MC KEEVER ; M.S. AKSELROD ; B.G. MARKEY.** *Rad. Prot. Dos.,* 1996, vol. 65 (¼), 267-272